(19) Europäisches Patentamt / European Patent Office / Office européen des brevets

(11) **EP 2 020 427 A1**

(12) **EUROPEAN PATENT APPLICATION**

(43) Date of publication:
04.02.2009 Bulletin 2009/06

(21) Application number: 07290975.7

(22) Date of filing: 03.08.2007

(51) Int Cl.:
*C08K 5/42* (2006.01)   *C08K 3/32* (2006.01)
*C08L 7/02* (2006.01)   *C08L 21/02* (2006.01)
*C08J 3/03* (2006.01)   *C08J 5/02* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Ampelos**
**Kedah Darul Aman (MY)**

(72) Inventors:
• **Lim, Im Tee**
  **0900 Kulim, Kedah (MY)**
• **Yeap, Su Sen**
  **13700 Perai, Pulau Pinang (MY)**

(74) Representative: **Bredema**
**38, avenue de l'Opéra**
**75002 Paris (FR)**

(54) **Glove and process for manufacturing the same**

(57)   The present invention relates to a blend of foam latex and to a manufacturing process to produce gloves from said blend. The present invention relates also to gloves obtainable by said process.

The blends of the invention comprises synthetic and/or natural latex, and at least a foaming agent selected from the group comprising disodium n-octadecylsulfosuccinamate, sodium dihexyl sulphosuccinate, potassium oleate, linear sodium dodecyl benzenesulfonate, sodium lauryl sulphate or alkyl aryl sulphonates.

The invention finds applications in all fields wherein blend foam latex may be used. For example, the present invention allows producing gloves, for example chirurgical gloves and research gloves, or soles.

EP 2 020 427 A1

## Description

### Field of the invention

The present invention relates to a blend of foam latex and to a manufacturing process to produce gloves from said blend. The present invention relates also to gloves obtainable by said process

The invention may find applications in all fields wherein blend foam latex may be used. For example, the present invention allows to produce gloves, for example chirurgical gloves and research gloves, or soles.

### Prior Art

The latex gloves are used in the art in many fields, for example in surgery, in research etc. The number of latex gloves used per year is increasing since the end of the eighties. For example, 3,9 million surgery gloves are used in the French public hospital per year. The latex gloves are principally used to protect patients from infections during a surgery and also to protect doctors from infections. The latex gloves are also usually used in research to protect the researcher from toxic products, such as acid, heavy metal, etc.

The latex gloves have properties of elasticity and suppleness which product tactile sensation as if the hand is not pull glove on.

But the latex gloves in the art have unsatisfying gripping properties. The lack of gripping of common used latex glove is a real problem for users such as surgeons and researchers.

Therefore, there is still in the art a need for improved latex gloves with better properties such as gripping properties.

### Description of the invention

The invention discloses blends of foam latex and a process for manufacturing gloves.

The blend of foam latex of the invention comprises synthetic and/or natural latex and at least a foaming agent selected from the group comprising disodium n-octadecylsulfosuccinamate, sodium dihexyl sulphosuccinate, potassium oleate, linear sodium dodecyl benzenesulfonate, sodium lauryl sulphate or alkyl aryl sulphonates.

The latex used in the present invention may be any latex known from one skill in the art. For example, it may be synthetic latex, natural latex or a mixture of natural and synthetic latex. The synthetic latex may be selected from the group comprising Carboxylated Acrylonitrile Butadiene Latex, Chloroprene Latex, Polyisoprene Latex, Polyurethane Latex, Polystyrene Butadiene Latex and etc. The natural may be natural latex selected from the group comprising Low ammonia latex (LA latex) or High Ammonia latex (HA latex).

The standard latex composition used in the present invention may be any standard latex composition known from one skill in the art except a foam latex composition. For example it may be a composition comprising at least natural latex, nitrile latex or mixtures thereof and at least one element selected from the group comprising zinc oxide, zinc dibutyl dithio carbamate, zinc mercapto benzothiazol, sulphur, titanium dioxide, antioxydant and pigment and/or mixtures thereof.

The present invention also discloses a blend of foam latex as described previously wherein the latex composition may be a mixture of natural and synthetic latex wherein the ratio between natural (NR) and synthetic latex may be in the range from 10 to 90 of natural against 90 to 10 of synthetic, preferably in the ratio of natural : synthetic latex equals to 70:30.

The present invention also discloses a blend of foam latex as described previously wherein the viscosity may be maintained at 1000 to 4000 cps, preferably 2000 to 3000 cps.

The foaming agent used in the present invention may be any foam agent known from one skill in the art. For example, it may be selected from the group comprising disodium n-octadecylsulfosuccinamate, sodium dihexyl sulphosuccinate, potassium oleate, linear sodium dodecyl benzenesulfonate, sodium lauryl sulphate, alkyl aryl sulphonate and mixtures thereof.

The level of foaming agent used determined the level of desired foam density or foam cellular structure, and also desired grip, comfort, absorbing, sponginess and cushioning/bouncing property on top of the degree or intensity of aeration by mechanical agitation.

The present invention also discloses a blend of foam latex as defined previously further comprising at least a foaming agent and/or at least a stabiliser.

The foam stabiliser used in the present invention may be any foam stabiliser known from one skill in the art. For example, it may be selected from the group comprising 1-alkyamido 3-dimethylamine propane 3 N-oxide, lauryl dimethylamine oxide, sodium hexametaphosphate, polysiloxane emulsion and mixtures thereof.

The stabilizer used in the present invention may be any stabilizer known from one in the art. For example, it may be selected from the group comprising triethanol amine oleate, potassium oleate, fatty acid alcohol polyglycol ether, casein, sodium or ammonium lauryl sulphate, sodium dodecyl benzenesulfonate, alkyl aryl sulphonates, non ionic surfactant and mixtures thereof.

The present invention also discloses a blend of foam latex as defined previously further comprising at least a thickener. The thickener used in the present invention may be any thickener known from one skill in the art. For example, it may be selected from the group comprising sodium alginate, methylcellulose, polyacrylate, ammonium caseinate and mixtures thereof.

The present invention also discloses a blend of foam latex as described previously comprising at least one additional compound selected from the group comprising a cross-linking agent, an accelerator, an activator, an antioxidant, an antiozonant, a plasticizer, a heat sensitizer, a sulphur, a zinc oxide, a pH control agent and a pigment.

The cross-linking agent used in the present invention may be any conventional cross-linking agent known from one skill in the art. For example, it may be a combination of sulphur, sulphur donor and metal oxide, for example zinc oxide.

The accelerator used in the present invention may be any accelerator known from one skill in the art. For example, it may be selected from the group comprising zinc diethydithiocarbamate, zinc dibutyldithiocarbamate, zinc benzyl dithiocarbamate, zinc mercaptobenzothiazole, tetramethyl thiuram disulphide, tetraethyl thiuram disulphide, N, N'-diphenylguadinine, N,N'-diphenyl thiourea, thiocarbinilide and mixtures thereof.

The activator used in the present invention may be any activator known from one skill in the art. For example, it may be zinc oxide.

The antioxidant used in the present invention may be any antioxidant known from one skill in the art. For example, it may be selected from the group comprising butylated hindered phenol, styrenated hindered phenol, zinc mercaptobenzimidazole and mixtures thereof.

The antiozonant used in the present invention may be any antiozonant known from one in the art. For example, it may be any antiozonant adapted to the realisation of the invention such as paraffin wax, microcrystalline wax and/or mixtures thereof.

The plasticizer used in the present invention may be any plasticizer known from one skill in the art. For example, it may be any selected from the group comprising a medium viscosity index napthenic oil, a paraffinic process oil and/or mixture thereof.

The heat sensitizer used in the present invention may be any heat sensitizer known from one skill in the art. For example, it may be an organopolysiloxane, a polyvinyl methyl ether and/or mixture thereof.

The pigment used in the present invention may be any pigment known from one skill in the art. For example, it may be an aqueous based colour pigment.

The pH control agent used in the present invention may be any pH control agent known from one skill in the art. For example, it may be ammoniated water, potassium hydroxide and/or mixture thereof.

The present invention also discloses a blend of foam latex as described previously, wherein the foam agent may represent 1 to 3, preferably 1.5 to 2.5 Parts per Hundred by weight dry Rubber (PHR), the foam stabiliser may represent up to 0.75, preferably up to 0.5 PHR and/or the latex stabilizer may represent up to 1.0, preferably up to 0.75 PHR.

The present invention also discloses a blend of foam latex as described previously, wherein the thickener may represent up to 1.0, preferably up to 0.50 Parts per Hundred by weight dry Rubber (PHR).

The present invention also discloses a process for manufacturing a glove having a texture foam coating made of an elastomeric material of foam compound with a foam roughening or cellular structure giving a high grip, high absorption and spongy cushioning properties useful as an external covering, and even more particularly on unsupported glove. In the present description, "foam compound" means the compound from the foam blend of the present invention.

The process of the invention comprises the successive following steps:

a) Cleaning a former in acid solution and rinsing said clean former in water,
b) dipping into a coagulant the rinsed former, the coagulant being at a temperature between 70 to 85°C,
c) drying the dipped former in an oven,
d) dipping the dried former into a foam latex blend as described previously,
e) taking out the said former from said latex blend and drying the said former covered by latex to gel said latex,
f) leaching the gelled latex covering the former in warm water,
g) curing the leached latex film covering the former in a oven,
h) stripping the cured latex film with inside out the said latex glove,
i) washing and drying the said inside out latex glove.

After step h), the foam layer of the glove is therefore outside.

According to the present invention, the process of the present invention may also be carried onto a first layer of natural or synthetic or mixture thereof of latex.

The former used in the present invention may be any former known from one skill in the art. For example, it may be any former having the required shape of glove. The former may be made from any well-known material from one skill in the art adapted to the realisation of the process of the invention.

The acid solution used in the process of the present invention may be any acid solution known from one skill in the art suitable to carry out the process of the present invention. For example, the acid solution may be selected from the group comprising hydrochloric acid, nitric acid, chromic acid, sulphuric acid and mixtures thereof. The pH of the acid solution may be comprised between 1 and 5, preferably between 3 and 4.

The present invention also discloses a process as defined above, further comprising between steps f) and g) the steps of :

m) drying the leached latex film covering the former in a oven,
n) dipping the dried former of step g) into a coagulant, the coagulant being at a temperature between 70 to 85°C,
o) drying the dipped former in an oven,
p) dipping the former into bench of standard latex,
q) drying the dipped former to gel the latex,
r) leaching the dried latex film in warm water,

The coagulant used in the process of the present invention may be any coagulant known from one skill in the art. For example, it may be selected from the group comprising calcium nitrate, water and non-ionic solution etc.

The coagulant may have a specific gravity (SG) comprise between 1.00 to 1.30 Kg/m$^3$.

The oven used in the process of the present invention may be any oven known from one skill in the art. The temperature of the oven in the process of the present invention may be any temperature adapted to the realisation of the present invention. For example, the temperature may be comprised between 40 and 110°C preferably between 60 and 85°C.

The temperature of warm water in the process of the present invention at steps a), f) and r) may be any temperature adapted to the realisation of the process. For example, the temperature may be comprised between 40 to 100°C, preferably between 40 to 95°C, more preferably between 55 to 85°C.

The steps n) to q) of the process of the present invention may be repeated depending on the desired thickness of the latex film. The repetition of steps n) to q) forms a multi layer dipping of coagulant and latex. An intermediate leaching may be performed between each repetition of steps n) to q), said intermediate leaching comprising the steps of:

x) leaching the dried latex of step p) in warm water,
y) drying the leached latex in an oven.

The water temperature for the intermediate leaching at step x) may be comprised between 40 to 95°C, preferably between 55 to 85°C. The oven drying temperature at step y) may be any temperature known from one skill in the art adapted to the realisation of the invention. For example, the oven drying temperature may be comprised between 40 and 110°C, preferably between 60 and 85°C.

The present invention also discloses a process wherein the last standard latex dip at step p) of the repetition of steps n) to g) may be an adhesive latex dip followed by a spraying of flock.

The adhesive latex used in the present invention may be any adhesive latex known from one skill in the art. For example, it may be any adhesive composition adapted to the realisation of the invention. For example, the adhesive latex may be a blend comprising natural latex, nitrile latex or mixture of natural latex and nitrile latex.

The flock used in the present invention may be any flock known from one skill in the art. For example, the flock may be a fibrous material, for example fibres of cotton, polyamide, polyester or mixture thereof. The fibres used in the present invention may have a length from 0.3 to 0.6 mm.

The present invention also discloses a process wherein the last latex dip of the process, i.e after step r), is a polymer composition.

The polymer solution used in the present invention may be any polymer composition known from one skill in the art. For example, it may be acrylic latex and/or polyurethane composition.

The present invention also discloses a process further comprising after step i) steps of overturning the said glove inside out (foam inside), treating the said overturned glove with chlorination, washing of the said treated glove, drying the treated glove and over turning inside out the dried glove so that the foam layer is at outside surface.

The present invention also discloses a process for manufacturing glove as described previously wherein the foam latex blend is manufactured by:

t) Mixing at least a latex, a stabilizer and a foaming agent in solution as described previously in order to obtain a blend of foam latex
u) adding in said blend of foam latex at least one agent selected in the group comprising a cross-linking agent, an accelerator, an activator, an antioxidant, an antiozonant, a plasticizer, a heat sensitizer, a pH control agent, a colloidal stabilizer and/or a pigment or a mixture thereof,

v) keeping the pH of said mix between 8.5 and 12 and the viscosity between 1000 to 4000cps.

The latex, the stabilizer, the foaming agent, the cross-linking agent, the accelerator, the activator, the antioxidant, the antiozonant, the plasticizer, the heat sensitizer, the pH control agent and the pigment used for producing the blend of latex may be as described previously.

The curing or cross-linking agent used in the present invention may be any curing agent known from one skill in the art. For example, it may be sulphur, sulphur donor, zinc oxide etc. The curing agent used in the present invention may be added in dispersion in the blend of foam latex.

The colloidal stabilizer used in the present invention may be any colloidal stabilizer known from one skill in the art. For example, it may be ammonium caseinate and/or potassium hydroxide.

After step u) of the process for producing the foam latex blend, the latex blend may be maintained at room temperature for maturation for example for approximately 16 to 24 hours or until the latex casting film's swelling index testing (i.e cutting a 4 cm disc from a cast dry film and immersed in toluene for 1 hour and then calculate the ratio of swelled film area over its original area) is in the range of 2.6 to 3.2, preferably 2.8 to 3.0. The latex compound may then be mechanically agitated at 800 to 1500 rpm, preferably 1000 to 1200 rpm for 0.75 to 1.75 hours, preferably 1 to 1.5 hours. This step of mechanical agitation may be done until a 2 times volume increase compared to its original volume or until the foam density reach 0.7 to 1.0, preferably 0.8 to 0.9 as measured by using a density bottle or 20 to 50% air volume.

Aeration by mechanical agitation is used to introduce foam cellular structure in the latex blend to the required foam density to give the desired roughening cellular surface, high grip properties and also the desired comfort, absorbing and spongy cushioning/ bouncing properties.

Means for aeration or agitating or mixing the blend of foam latex in the process of the present invention may be any means known from one skill in the art. For example, said means may be selected from the group comprising mechanical agitation, stirring device, air injection or pumping device, frothing machine suitable to the realisation of the present invention.

During the mechanical agitation or aeration, the pH of the foam compound is preferably maintained at 8.5 to 12, preferably at 9.5 to 10.5.

The viscosity of the foam compound may be preferably maintained at 800 to 5000 cps, preferably 1000 to 4000 cps.

The foam cellular size is likely to be dependent also on the viscosity of the foam compound where higher viscosity may give smaller and more compact foam that is not easily collapse with prolonged storage time.

The present invention also discloses a process of making a natural latex blend foam as described above, further comprising after step t) of mixing, a prevulcanisation step at 40 to 60°C, preferably 45 to 55°C, for 1 hour of the blend obtain at step t) and then cooling down to room temperature said prevulcanized blend, for example during 15 to 19 hours, preferably 16 to 18 hours. Then the viscosity of the blend may be raised, if necessary, to 100 to 4000 cps, depending on the ultimate desired foam structure, or pick up using thickening agent such as described above.

The present invention discloses blends using natural and/or synthetic latex gloves made particularly to suit the application condition and the specified mechanical and chemical protection requirements, for example improved latex gloves.

The present invention allows obtaining gloves. Accordingly, the present invention also relates to latex glove obtainable by the process of the invention. The invention provides a latex glove having a high grip, high absorption and spongy cushioning properties useful as an external covering, and even more particularly on unsupported glove.

The gloves of the present invention have high grip properties as applied in dry conditions as well as in wet conditions particularly on lubricated surfaces such as soapy surfaces or oily surfaces. The gloves of the invention have also physical and chemical properties required for mechanical and chemical protection and provide a greater comfort to the wearer with the spongy absorbing, cushioning or bouncing feeling. Such gloves with foam roughening cellular structure on the external surface are suitable for use in application in contact with dry or lubricated surfaces to achieve maximum gripping and minimize slippage incidents.

Natural latex foam gloves of the present invention have excellent dry grip or wet grip compared to the common use latex glove. A latex material according the invention for application in contact with dry surfaces or in contact with aqueous solutions provides greater cushioning, absorption and comfort.

Synthetic latex foam gloves of the present invention have better oil resistance and chemicals resistance than common latex gloves. A synthetic latex material according the invention for application in contact with dry surfaces or in contact with various chemicals, oily and/or lubricated surfaces provides a greater absorption and comfort.

Natural and synthetic latex blend foam gloves of the invention have better oils and chemicals resistance than latex gloves. A natural and synthetic blend latex material according the invention for application in contact with dry surfaces or in contact with aqueous solutions/ chemicals or oily/ lubricated surfaces provides good grip, absorption, cushioning and comfort properties

Thus, the present invention replies to the problems of the prior art and provides a process and compositions for manufacturing gloves having better gripping properties and better chemical resistance than prior art gloves.

Others advantages could appear to one skill in the art from the followings non limiting examples illustrated by annexed figures.

**Brief description of the figures**

- Figure 1 is a schematic representation of one embodiment of the process of the present invention for obtaining latex foam gloves.
- Figure 2 is a schematic representation of one embodiment of the process of the present invention for obtaining synthetic latex foam gloves.
- Figure 3 is a schematic representation of on embodiment of the process of the present invention for obtaining a blend of natural and synthetic latex foam glove.

**EXAMPLES**

**Example 1: Process of the present invention for obtaining latex foam gloves**

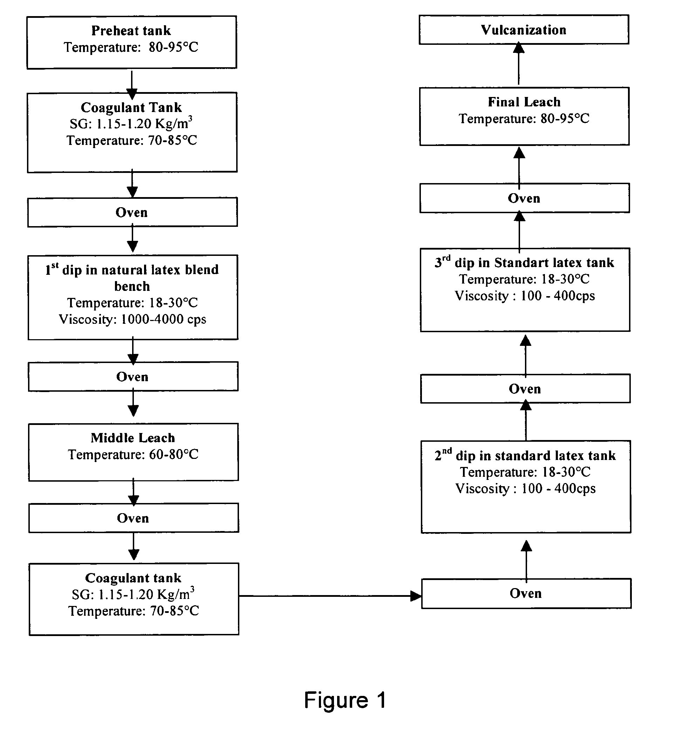

Figure 1 is a schematic representation of the process of the invention wherein the step of dipping in natural latex blend is repeated three times. The former is first preheated in a preheated tank at 80 to 95°C, then the former is dipped into a coagulant solution in a coagulant tank, said coagulant having a specific gravity ("density") of 1.15 to 1.20 Kg/m$^3$ and a temperature between 70 to 85°C. The dipped former is then dried in an oven. After drying the former is dipped in a foam natural latex blend as described previously, the said blend having a viscosity comprise between 1000 and 4000 cps and a temperature between 18 to 30°C. The viscosity was measured by a Brookfield LVT viscometer at 3 rpm, at 23°C and at atmospheric pressure. The latex dipped former is then dried in an oven. The dried latex former is then leached in warm water at 60 to 80°C. The leached former is then dried in an oven. The former is then repeatedly dipped in the coagulant solution and dried. The dried coagulant former is then dipped into a standard latex tank and dries the latex film in oven. The composition of the standard latex used comprises natural latex (LA or HA), zinc oxide 2 PHR, zinc dibutyl dithio carbamate: 0.5 PHR, zinc mercapto benzo thiazol: 0.2 PHR, sulphur : 0.5 PHR, titanium dioxide : 2 PHR, antioxidants : 1 PHR and a pigment. The viscosity of the standard latex tank was comprised between 100 to 400 cps. Dipping and drying is then repeated one more time onto the said dried former. A final leach of the former is then carried out in warm water at 80 to 95°C. The former is then passed through a series of vulcanization oven to cure the glove. After curing, the glove is stripped off from the former.

The process was also done with a composition of standard latex comprising latex nitrile, zinc oxide: 3 PHR, zinc dibutyl dithio carbamate: 0.8 PHR, sulphur: 0.5 PHR, titanium dioxide: 2 PHR and a pigment.

**Example 2: process for obtaining synthetic foam gloves**

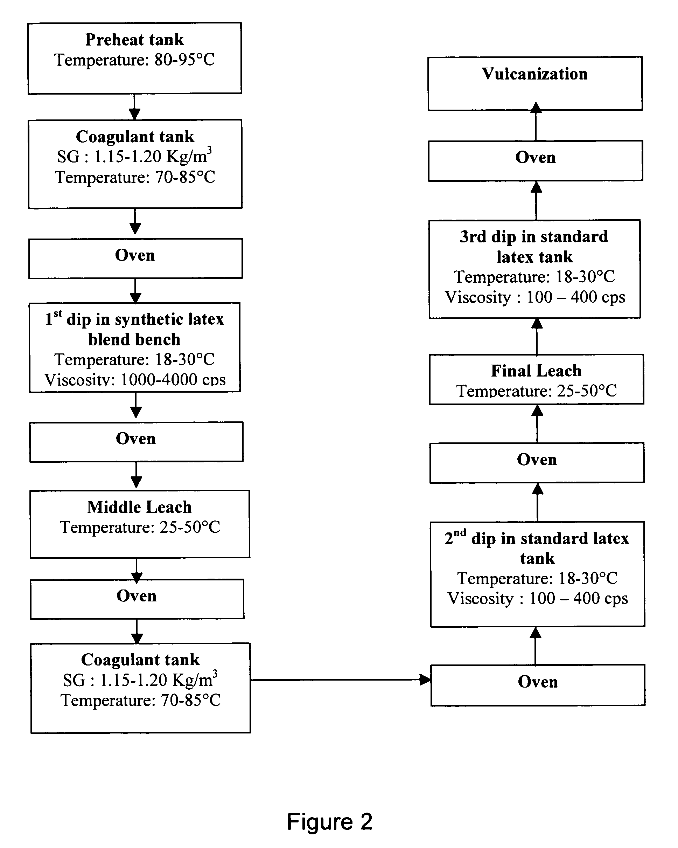

Figure 2 is a schematic representation of the process of the invention wherein the former is first preheated in a preheated tank at 80 to 95°C, then the former is dipped in coagulant solution in a coagulant tank, said coagulant having a specific gravity of 1.15 to 1.30 Kg/m$^3$ and a temperature between 70 to 85°C. The dipped former is then dried in an oven. After drying the former is dipped in a foam synthetic latex blend tank as described previously, said blend having a viscosity comprise between 1000 and 4000 cps and synthetic latex at a temperature between 18 to 30°C. The viscosity was measured by a Brookfield LVT viscometer at 3 rpm, at 23°C and at atmospheric pressure. The latex dipped former is then dried in an oven. The dried latex former is then leached in warm water at 25 to 50°C. The leached former is then dried in an oven. The dried former is then repeated dipped in the coagulant solution and drying the said former. The dried coagulant former is then dipped into a standard latex tank and drying the latex film in oven. The composition of the standard latex used comprises natural latex (LA or HA), zinc oxide 2 PHR, zinc dibutyl dithio carbamate: 0.5 PHR, zinc mercapto benzothiazol: 0.2 PHR, sulphur : 0.5 PHR, titanium dioxide : 2 PHR, antioxidants : 1 PHR and a pigment. The viscosity of the standard latex tank was comprised between 100 to 400 cps. The dried latex former is then leached in warm water at 25 to 50°C and then dried in an oven. The dried former is then dipped into a standard latex tank and drying the latex film in an oven. The former is then passed through a series of vulcanization oven to cure the glove. After curing, the glove is stripped off from the former.

The process was also done with a composition of standard latex comprising latex nitrile, zinc oxide: 3 PHR, zinc dibutyl dithio carbamate: 0.8 PHR, sulphur: 0.5 PHR, titanium dioxide: 2 PHR and a pigment

**Example 3: process for obtaining a blend of natural and synthetic latex foam gloves**

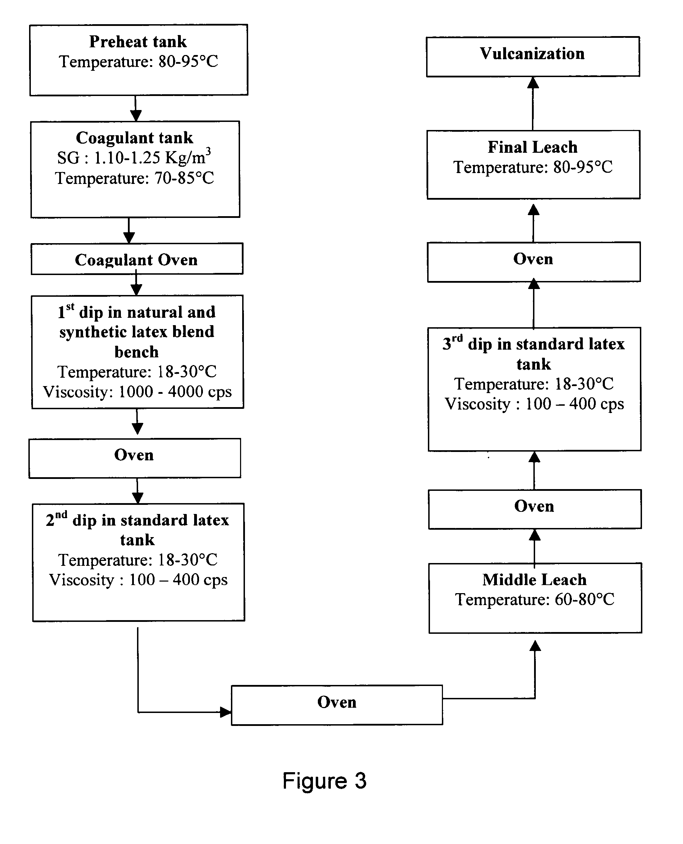

Figure 3 is a schematic representation of the process of the invention wherein a foam natural and synthetic latex blend is used. The former is first preheated in a preheated tank at 80 to 95°C, then the former is dipped in coagulant solution in a coagulant tank, said coagulant having a specific gravity of 1.10 to 1.25 Kg/m$^3$ and a temperature between 70 to 85°C. The dipped former is then dried in an oven. After drying the former is dipped in a foam natural and synthetic latex blend tank as described previously, said blend having a viscosity comprise between 1000 and 4000 cps and the foam natural and synthetic latex at a temperature between 18 to 30°C. The viscosity was measured by a Brookfield LVT viscometer at 3 rpm, at 23°C and at atmospheric pressure. The dipped former is then dried in an oven and dipping into a standard latex tank. The composition of the standard latex used comprises natural latex (LA or HA), zinc oxide 2 PHR, zinc dibutyl dithio carbamate: 0.5 PHR, zinc mercapto benzothiazol: 0.2 PHR, sulphur: 0.5 PHR, titanium dioxide : 2 PHR, antioxidants : 1 PHR and a pigment. The viscosity of the standard latex tank was comprised between 100 to 400 cps. The latex dipped former is then dried in an oven. The dried latex former is then leached in warm water at 60 to 80°C and dried in an oven. The dried former is then dipped into a standard latex tank and drying the latex film in an oven. The former is then passed through a series of vulcanization oven to cure the glove. After curing, the glove is stripped off from the former.

The process was also done with a composition of standard latex comprising latex nitrile, zinc oxide: 3 PHR, zinc dibutyl dithio carbamate: 0.8 PHR, sulphur: 0.5 PHR, titanium dioxide: 2 PHR and a pigment.

**Example 4: Latex gloves**

Table 1- Composition of natural latex foam blend

| Components | Material | Range PHR |
|---|---|---|
| Natural latex | LA or HA Latex | 100 |
| Foaming package | Disodium n-octadecylsulfosuccinamate/ Sodium dihexyl sulphosuccinate | 1.5 - 2.5 |
|  | Potassium oleate | 0.5 - 1.0 |
|  | Sodium hexametaphosphate | 0.25 - 0.75 |
| Thickener | Sodium alginate/ Methyl Cellulose | 0.0 - 0.8 |
| Sulphur cross-linking agents, accelerators, activators, stabilizers, plasticizers, heat sensitizers, antioxidants, antiozonants and pigments. |  |  |

**Example 5 : Synthetic gloves**

Table 2- Composition of Synthetic latex foam blend

| Components | Material | Range PHR |
|---|---|---|
| Synthetic latex | Carboxylated Acrylonitrile Butadiene Latex | 0-100 |
|  | Chloroprene Latex | 0-100 |
|  | Polyisoprene Latex | 0-100 |
|  | Polyurethane Latex | 0-100 |
|  | Polystyrene Butadiene Latex | 0-100 |
| Foaming package | Disodium n-octadecylsulfosuccinamate/ Sodium dihexyl sulphosuccinate | 1.5 - 2.5 |
|  | Sodium or Ammonium Lauryl Sulphate / Sodium dodecyl benzenesulfonate / Alkyl aryl sulphonates | 0.0 - 0.75 |

(continued)

| Components | Material | Range PHR |
|---|---|---|
| | 1-alkyamido3-dimethylamine propane3 N-oxide/ Lauryl dimethylamine oxide/ Sodium hexametaphosphate/ Polysiloxane emulsion | 0.0 - 0.50 |
| Thickener | Sodium alginate/ Methyl Cellulose / Polyacrylate Ammonium caseinate | 0.0 - 0.75<br>0.0 - 1.0 |
| Metal oxide cross-linking agents, accelerators, sulphur, stabilizers, plasticizers, heat sensitizers, antioxidants, antiozonants and pigments.. | | |

**Example 6: blends of natural and synthetic gloves**

Table 3- Composition of Blend of Natural and Synthetic foam latex

| Components | Material | Range PHR |
|---|---|---|
| Natural Latex | LA or HA latex | 10- 90 |
| Synthetic latex | Carboxylated Acrylonitrile Butadiene Latex / Chloroprene Latex/ Polyisoprene Latex/ Polyurethane Latex/ Polystyrene Butadiene Latex | 90 - 10 |
| Foaming package | Disodium n-octadecylsulfosuccinamate/ Sodium dihexyl sulphosuccinate | 1.5 - 2.5 |
| | Sodium or Ammonium Lauryl Sulphate/ Sodium dodecyl benzenesulfonate/ Alkyl aryl sulphonates | 0.0 - 0.75 |
| | 1-alkyamido 3- dimethylamine propane 3 N-oxide/ Lauryl dimethylamine oxide/ Sodium hexametaphosphate/ Polysiloxane emulsion | 0.0 - 0.50 |
| Thickener | Sodium alginate/ Methyl Cellulose / Polyacrylate Ammonium caseinate | 0.05 - 0.75<br>0 - 0.5 |
| Cross-linking agents and accelerators, activator, stabilizers, plasticizers, heat sensitisers, antioxidants, antiozonants and pigments. | | |

**Example 7: Process for manufacturing the blend of latex disclosed in Table 1**

According to above Table1, the foam latex blend of the invention is made as follow.

For the blend of natural latex, the natural latex was added in 60% latex emulsion. Stabilizers and surfactants as defined previously were added in solution. Sulphur was added in dispersion as a curing agent. Accelerators as described previously were added in dispersion and as accelerators. A pH control agent as described previously was added in the solution. After mixing, the latex blend was then prevulcanised at 45 to 55°C for 1 hour and then cooled down to room temperature for approximately 16 to 18 hours. The further ingredients disclosed in above table 1 were then added: ammonium caseinate was be added as a colloidal stabilizer, butylated hindered phenol, styrenated hindered phenol and zinc mercaptobenzimidazole were added as an antioxidant, zinc oxide was added as the activator for curing process and ammoniated water was added as a pH control agent. Foaming agents: disodium n-octadecylsulfosuccinamate, sodium dihexyl sulphosuccinate and potassioun oleate were added and foaming stabilizers: Sodium hexametaphosphate was added. The compound viscosity was then raised to 100 to 4000 cps using thickening agent: sodium alginate and methyl celluloses. After mixing well, the latex compound was kept at room temperature for maturation for 16 to 24 hours or until the latex casting film's swelling index testing shows 2.8 to 3.0. The latex compound was then mechanical agitated at 1000 to 1200 rpm for 1 to 1.5 hours to foam the blend till an increased of volume to about 2 times of its original volume or to reach a foam density of 0.8 to 0.9 as measured by using a density bottle or 40 to 50% air volume. Mechanical agitation was used for the aeration process. During this aeration process, foam, cellular structure or froth or air bubbles was introduced into the latex blend and hence increased the overall volume and lower the density of the blend. The blend was constantly aerated or agitated in the latex dipper during dipping to maintain the required foam volume and density. The pH of the foam compound was maintained at 9.7 to 10.7 and the viscosity of the foam compound was maintained at 1000 to 4000 cps as measured by a viscometer.

**Example 8: Process for manufacturing the blend of latex disclosed in Table 2**

According to above table 2, the blend of foam synthetic latex: Carboxylated Acrylonitrile Butadiene, Chloroprene, Polyisoprene, Polystyrene Butadiene Latex and/or polyurethane latex, the foam blend is made as previously described for the natural latex without prevulcanised stage and a primarily metal oxide was used as curing agent.

For the blend of foam synthetic latex using carboxylated acrylonitrile butadiene latex, the latex was added in 45% latex emulsions, while using chloroprene latex, it was added as 59% latex emulsion. Ammoniated water was used as a pH control agent, sodium and ammonium lauryl sulphate, sodium dodecyl benzenesulfonate, alkyl aryl sulphonates and non-ionic surfactant was added as stabilizers and surfactants. Zinc oxide and sulphur were added as curing agents, zinc diethydithiocarbamate, zinc dibutylditiocarbamate and zinc mercaptobenzothiazole, diphenyl guadine and thiorea, thiocarbinilide were added as accelerators. Heat sensitisers: organopolysiloxane. disodium n-octadecylsulfosuccinamate were added, foaming and frothing agents: sodium dihexyl sulphosuccinate were added and foam stabiliser: 1-alkyamido 3-dimethylamine propane 3 N-oxide, lauryl dimethylamine oxide, sodium hexametaphosphate were added. The compound viscosity was adjusted with viscosity modifier: sodium alginate, polyacrylate and ammonium caseinate as a thickening agent. After mixing well, the latex compound was then kept at room temperature for maturation for approximately 18 to 24 hours. The latex compound was then mechanical agitate at 1000 to 1200 rpm for 1 to 1.5 hours to froth the compound till an increased of volume to about 2 times of its original volume or to reach a foam density of 0.8 to 0.9 as measured by using a density bottle or 40 to 50% air volume. Mechanical agitation machine was used for the aeration process. During this aeration process, foam or cellular structure, or froth, or air bubbles was introduced into the latex compound and hence increased the overall volume and lower the density of the compound. The compound was constantly aerated or agitated in the latex dipper during dipping to maintain the required foam volume and density. The pH of the foam compound was maintained at 9.00 to 10.00 and the viscosity of the foam compound was maintained at 1000 to 4000 cps as measured by a viscometer.

**Example 9: Process for manufacturing the blend of latex disclosed in Table 3**

According to above table 2, the blend of foam natural and synthetic latex was made as previously described in the example 7 and/or 8 for natural and/or synthetic latex.

**Example 10: process for manufacturing gloves**

The present invention discloses a process for manufacturing gloves from blend of latex as described previously. The process comprising different steps using glove former.

Glove former was washed with acid solution and then rinsed with water. The former was then dipped into a coagulant mixture comprising of calcium nitrate, water and a non-ionic surfactant. After dipping into coagulant, the former coated with coagulant was then dried in oven before dipped into the foam latex blend to the wrist area. Continual mechanical aeration or agitation in the latex dipper as done in order to maintain the foam cellular structure or froth volume from being collapsed.

The former coated with foam latex was then dried in oven to gel the latex film. The gelled foam latex film was leached in warm water where necessary follow by drying in an oven. Multi layer dipping of coagulant and latex dipped was applied depending on the desired thickness of film where leaching performed between layer of dipping where made to wash away serum and ensure even coating and good adhesion of the layers. A last dipped with adhesive latex was applied with flock spraying, followed by drying and leaching the flocked latex film to achieve a flock-lined glove for greater comfort and sweat absorption. Alternatively, after the last leaching, a polymer dip coating can be used to replace the flock adhesive dip instead to achieve a polymer coated glove for ease of donning. The latex film was then cured in an oven, stripped or removed out from the former using water jet where the foam layer is appeared at the outside surface. For the flocked lined version, the glove can be treated with or without chlorination, washed and dry as it is. For the polymer coating glove, the latex film was over turn inside out so that the foam layer is inside when chlorinate, wash and dry. After dried, the dried glove is overturn again to have the foam layer roughening cellular texture left remains as the outside surface of the glove to give the desired grip, absorbing, sponginess and cushioning/bouncing property.

**Example 10: Tests of gloves of the invention**

The latex foam Glove, Synthetic Foam Glove and Blends of Natural and Synthetic Foam Glove obtain by the process of the invention were evaluated on various performance properties illustrated below:

1) Coefficient of friction
2) Gripping load
3) Dexterity
4) Water absorption
5) Oil resistance
6) Chemical resistance
7) Mechanical resistance properties
8) Penetration resistance properties

1) Coefficient of friction

The surface texture or surface finishing of gloves of the present invention in relation to grip or non-slip performance was determined by the static coefficient of friction against glass surface at dry or wet or lubricated condition. Coefficient of Friction between foam surface and glass surface in dry and wet Condition

1) A specimen in rectangular dimension of 4.25cm X 7.5cm was cut at the palm area of the foam glove of the present invention.
2) Using a double-sided adhesive tape, the inner surface of the foam glove was attached to a stainless steel sled of similar area or dimension with a fixed weight of 537.5g.
3) The stainless steel sled with a hook at one of the end was tied with a string. The string then passed through a small pulley that fixed onto the centre of the hole of a Tensometer (Instron Tensile Testing machine). The other loose end of the string was then tied to the grip holder of the Tensometer (Instron Tensile Testing machine).
4) The Tensometer was set at 10N load cell and at the speed of 150mm/min.
5) The sled was placed on top of a big glass plate where the glass surface was assured clean and dry and the foam surface was in contact with the glass surface.
6) Start the testing machine and the sled was pulled across a glass surface where the sled was seen moving, i. e. sliding, against the glass.
7) The force (N) applied to move or slide the sled for 50mm was captured and saved.
8) The static coefficient of friction for each testing was calculated as given below:

$$\text{Static coefficient of friction (COF)} = F/mg$$

Where F = maximum force captured in N

m= sled weight plus specimen weight in kg

g= 9.8 or gravity force acceleration in $m.s^{-2}$

For wet condition testing of coefficient of friction such as soapy, oily or lubricated surface, the testing was carried out as per dry condition except the specific soap solution or oil was applied on the foam surface and the glass surface.

2) Gripping load

A grip force was applied to prevent slip. A grip force test apparatus was developed to measure the relative grip force required to rotate a stainless steel shaft of 2 inches (5.12 cm) in diameter and the maximum grip force to turn the rotating shaft without slippage was captured by the testing apparatus. The maximum grip force that can turn the rotating shaft without slippage varied in accordance with the person hand gripping force and the type of glove surface. The grip test device can be tested on a dry condition or on a wet condition. In wet condition the shaft of the grip test apparatus is lubricated with 10% soap solution or various types of aqueous solution, chemicals, oils or lubricants.

The grip test apparatus was constructed with a rotatable stainless steel shaft with a digital display load cell to capture the maximum force applied. The grip test was carried out as follows:

1. The grip test apparatus with a fixed load cell of 20N was clamped on a table or a workbench.
2. A volunteer tester donned the test glove of correct hand size.
3. For testing dry grip, the tester turn the rotating shaft in a clock wise direction and the maximum grip force (Gf) applied to rotate the shaft without slippage was captured by the grip test apparatus

For wet, oily or lubricated grip, the above testing protocol was followed except the rotating shaft was applied with specific aqueous solution or oil to ensure that the overall surface of the shaft and the glove foam surface were properly wetted before carrying out the testing process.

3) Dexterity

The dexterity of various foam gloves was determined as defined in European Norm EN 420:2003.

4) Water absorption

Water absorption of invention's foam gloves was determined by cutting a disc of 4cm diameter from the palm of the foam glove of the invention. The initial weight (W0) was recorded and then immersed in water for 1 day. The disc was then removed from water and wiped dry the excess water droplets with a cloth/ tissue before taking the weight (W1). The water absorption is calculated as percentage of increased in weight as shown below:

$$\text{Water absorption (\%)} = \frac{W1 - W0}{W0} \times 100$$

5) Oil resistance

The oil resistance of invention's foam gloves was determined by cutting a disc of 4cm (L0) diameter from the palm of the foam glove. The disc was then immersed in specific type of oil for 1, 4 and 8 hrs and the increased in diameter (L1) was measured and any separation or delamination of layer caused by swelling in oil was observed and recorded. The percentage of swelling in oils was calculated as:

$$\text{Swelling in Oil (\%)} = ((L1 - L0)/L0) \times 100$$

6) Chemicals resistance

The chemical resistance of invention's foam gloves was determined to various solvents like n-heptane, methanol, acetone and toluene using Swelling Index Test.
The testing procedure for chemical resistance using swelling index was:

1. A test piece with a diameter of 40mm was cut from the palm of the invention foam glove. The test piece was examined for any imperfections and to discard or to re-cut another piece if there is any imperfection.
2. The test piece was placed in a Petri dish containing half full of chemical in a fume cupboard. The test piece was fully immersed in chemical and the Petri dish was covered to prevent loss of chemical by evaporation.
3. The test piece was swelled in chemical for $60 \pm 1$ minutes.
4. The diameter of the swollen test piece was measured by placing the Petri dish on a graph paper.
5. The swollen diameter was read in horizontal ($D_1$) and vertical ($D_2$).
6. The Swelling Index is calculated as below:

$$SI = \left[ \frac{\{\frac{1}{2}(D_1 + D_2)\}^2}{4^2 - 1} \right]$$

7) Mechanical resistance

The mechanical resistance of invention's foam gloves was determined as defined in European Norm EN 388: 2003.

8) Penetration resistance

The penetration resistance invention's foam gloves was determined using water leak testing as defined in European Norm EN 374-2:2003.
The results of latex foam glove, synthetic foam glove, blends of natural and synthetic foam glove test as described above are given in table 4:

Table 4: Results of invention's gloves tests (1/2).

| Performance Test | Latex Foam Glove | Synthetic Foam Glove | Blends of Natural & Synthetic Foam Glove |
|---|---|---|---|
| 1.Static Coefficient of Friction :<br>a) Dry condition<br>b) Water<br>c) 10% soap<br>d) Palm oil<br>e) Engine oil | -<br>-<br>-<br>-<br>- | 3.08<br>0.86<br>0.53<br>0.54<br>0.69 | 3.80<br>1.24<br>0.30<br>0.78<br>1.40 |
| 2.Gripping Load (kg)<br>a) Dry condition<br>b) Water<br>c) 10% soap<br>d) Palm oil<br>e) Engine oil | 8.0<br>-<br>3.0<br>5.0<br>6.5 | 15.36<br>8.45<br>7.25<br>3.02<br>4.12 | 15.24<br>10.84<br>5.15<br>4.52<br>4.87 |
| 3. Dexterity<br>(EN420:2003) | 5 | 5 | 5 |
| 4. Water absorption (%) | 50.0 | 81.0 | 48.5 |
| 5. Oil Resistance<br>a) Swelling (%):<br>   -1 hour<br>   - 4 hours<br>   - 8 hours<br>b) Delamination<br>   -1 hour<br>   -4 hours<br>   - 8 hours | <br><br>2.5<br>10.0<br>15.0<br><br>No delamination<br>No delamination<br>No delamination | <br><br>0<br>0<br>0<br><br>No delamination<br>No delamination<br>No delamination | <br><br>5.0<br>16.25<br>25.0<br><br>No delamination<br>No delamination<br>No delamination |

Table 4: Results of invention's gloves tests (2/2)

| Performance Test | Latex Foam Glove | Synthetic Foam Glove | Blends of Natural & Synthetic Foam Glove |
|---|---|---|---|
| 6.Swelling Index | | | |

**EP 2 020 427 A1**

(continued)

| Performance Test | Latex Foam Glove | Synthetic Foam Glove | Blends of Natural & Synthetic Foam Glove |
|---|---|---|---|
| a) Methanol | 0.05 | 0.21 | 0.05 |
| b) N-hexane | 1.33 | 0.16 | 0.96 |
| c) Toluene | 2.06 | 1.36 | 1.72 |
| d) Acetone | 0.12 | 0.96 | 0.21 |
| 7.Mechanical resistance (EN388:2003) | | | |
| a) Abrasion | 2 | 2 | 2 |
| b) Blade Cut | 1 | 0 | 1 |
| c) Tear | 1 | 0 | 0 |
| d) Puncture | 1 | 0 | 1 |
| 8. Penetration resistance (EN374-2:2003) Water leak holes, Passed AQL. | 0.65 | 0.40 | 0.65 |
| - not measured | | | |

**Claims**

1. A blend of foam latex comprising:

   - synthetic and/or natural latex,
   - at least a foaming agent selected from the group comprising disodium n-octadecylsulfosuccinamate, sodium dihexyl sulphosuccinate, potassium oleate, linear sodium dodecyl benzenesulfonate, sodium lauryl sulphate or alkyl aryl sulphonates.

2. A blend according to claim 1 further comprising at least a stabilizer selected from the group comprising triethanol amine oleate, potassium oleate, dehydol, casein, sodium or ammonium lauryl sulphate, sodium dodecyl benzenesulfonate, alkyl aryl sulphonates and non ionic surfactant.

3. A blend according to claim 1 or 2 further comprising at least a foam stabilizer selected from the group comprising 1-alkyamido 3-dimethylamine propane 3 N-oxide, lauryl dimethylamine oxide, sodium hexametaphosphate and/or polysiloxane emulsion.

4. A blend according to anyone of claims 1 to 3, wherein synthetic latex is selected from the group comprising carboxylated acrylonitrile butadiene latex, chloroprene latex, polyisoprene, polystyrene butadiene and polyurethane latex.

5. A blend according to anyone of claims 1 to 4, wherein the natural latex is selected from the group comprising LA latex and HA latex.

6. A blend according to anyone of claims 1 to 5, wherein the foaming agent represents 1.5 to 2.5 Parts per Hundred by weight of dry Rubber (PHR).

7. A blend according to anyone of claims 1 to 6, wherein the foam stabiliser represents up to 0.75 Parts per Hundred by weight of dry Rubber (PHR).

8. A blend according to anyone of claims 1 to 7, wherein the stabilizer represents up to 1.0 Parts per Hundred by weight of dry Rubber (PHR).

9. A blend according to anyone of claims 1 to 8 further comprising a thickener selected from the group comprising sodium alginate, methyl cellulose, polyacrylate and/or ammonium caseinate or a mixture thereof.

10. A blend according to anyone of claims 1 to 9, wherein the viscosity of the blend is about 1000 to 4000 cps.

13

**11.** A blend according to anyone of claims 1 to 10 further comprising at least one additional compound selected from the group comprising a cross-linking agent, an accelerator agent, an activator agent, an antioxidant, an antiozonant, a plasticizer, a heat sensitizer, a sulphur, a zinc oxide, a pH control agent and a pigment or a mixture thereof.

**12.** Process for manufacturing a latex glove comprising the successive following steps:

a) Cleaning a former in acid solution and rinsing said clean former in water,
b) dipping into a coagulant the rinsed former, the coagulant being at a temperature between 70 to 85°C,
c) drying the dipped former in an oven,
d) dipping the dried former into a foam latex blend as described previously,
e) taking out the said former from said latex blend and drying the said former covered by latex to gel said latex,
f) leaching the gelled latex covering the former in warm water,
g) curing the leached latex film covering the former in a oven,
h) stripping the cured latex film with inside out (foam layer outside) the said latex glove,
i) washing and drying the said inside out latex glove.

**13.** Process according claim 12 further comprising between steps f) and g) the steps of :

m) drying the leached latex film covering the former in a oven,
n) dipping the dried former of step g) into a coagulant, the coagulant being at a temperature between 70 to 85°C,
o) drying the dipped former in an oven,
p) dipping the former into bench of latex,
q) drying the dipped former to gel the latex,
r) leaching the dried latex film in warm water.

**14.** Process according claim 13, wherein steps n) to q) are repeated.

**15.** Process according to claim 13, wherein an intermediate leach is performed between each repetition of steps n) to q), the intermediate leach comprising the steps of:

x) leaching the dried latex of step f) in warm water,
y) drying the leached latex in a oven.

**16.** Process according to anyone of claims 12 to 15, wherein the coagulant is selected from the group comprising calcium nitrate, water and non-ionic surfactant solution.

**17.** Process according to anyone of claims 12 to 16, wherein the temperature of the water at steps a), f) and n) ranges from 40 to 95°C.

**18.** Process according to anyone of claims 12 to 17, wherein the last standard latex dip at step p) of the repetition of steps n) to g) is an adhesive latex dip followed by a spraying of flock.

**19.** Process according to anyone of claims 12 to 18, wherein the last latex dip of the process is a polymer composition.

**20.** Process according to anyone of claims 12 to 19, wherein the process further comprising, after step i), steps of overturning the said glove inside out, treating the said overturned glove with chlorination, washing of the said treated glove, drying the treated glove and over turning inside out the dried glove so that the foam layer is at outside surface

**21.** Process according to any one of claims 12 to 20, wherein the blend of latex is manufactured by:

t) mixing at least a latex, a stabilizer and a foaming agent according to anyone of claims 1 to 8 in order to obtain a solution,
u) adding to said solution at least one agent as defined in claim 9 and mixing,
v) keeping the pH of said mix between 8.5 and 12 and the viscosity between 1000 to 4000 cps.

**22.** Glove obtainable from the process according to anyone of claims 12 to 21.

```
┌─────────────────────────┐                          ┌─────────────────────────┐
│      Preheat tank       │                          │      Vulcanization      │
│  Temperature: 80-95°C   │                          │                         │
└───────────┬─────────────┘                          └────────────▲────────────┘
            │                                                      │
┌───────────▼─────────────┐                          ┌────────────┴────────────┐
│      Coagulant Tank      │                          │       Final Leach        │
│  SG: 1.15-1.20 Kg/m³    │                          │  Temperature: 80-95°C   │
│  Temperature: 70-85°C   │                          │                         │
└───────────┬─────────────┘                          └────────────▲────────────┘
            │                                                      │
┌───────────▼─────────────┐                          ┌────────────┴────────────┐
│          Oven           │                          │          Oven           │
└───────────┬─────────────┘                          └────────────▲────────────┘
            │                                                      │
┌───────────▼─────────────┐                          ┌────────────┴────────────┐
│ 1ˢᵗ dip in natural latex │                          │ 3ʳᵈ dip in Standart latex│
│         blend bench      │                          │          tank            │
│  Temperature: 18-30°C   │                          │  Temperature: 18-30°C   │
│ Viscosity: 1000-4000 cps│                          │ Viscosity : 100 - 400cps│
└───────────┬─────────────┘                          └────────────▲────────────┘
            │                                                      │
┌───────────▼─────────────┐                          ┌────────────┴────────────┐
│          Oven           │                          │          Oven           │
└───────────┬─────────────┘                          └────────────▲────────────┘
            │                                                      │
┌───────────▼─────────────┐                          ┌────────────┴────────────┐
│      Middle Leach       │                          │ 2ⁿᵈ dip in standard latex│
│  Temperature: 60-80°C   │                          │          tank            │
│                         │                          │  Temperature: 18-30°C   │
│                         │                          │ Viscosity : 100 - 400cps│
└───────────┬─────────────┘                          └────────────▲────────────┘
            │                                                      │
┌───────────▼─────────────┐                          ┌────────────┴────────────┐
│          Oven           │                          │          Oven           │
└───────────┬─────────────┘                          └────────────▲────────────┘
            │                                                      │
┌───────────▼─────────────┐                                       │
│      Coagulant tank      │───────────────────────────────────────┘
│  SG: 1.15-1.20 Kg/m³    │
│  Temperature: 70-85°C   │
└─────────────────────────┘
```

# Figure 1

```
┌─────────────────────────┐                              ┌─────────────────────────┐
│      Preheat tank       │                              │      Vulcanization      │
│ Temperature: 80-95°C    │                              │                         │
└─────────────────────────┘                              └─────────────────────────┘
            │                                                         ▲
            ▼                                                         │
┌─────────────────────────┐                              ┌─────────────────────────┐
│     Coagulant tank      │                              │          Oven           │
│  SG : 1.15-1.20 Kg/m³   │                              │                         │
│ Temperature: 70-85°C    │                              └─────────────────────────┘
└─────────────────────────┘                                          ▲
            │                                                         │
            ▼                                             ┌─────────────────────────┐
┌─────────────────────────┐                              │    3rd dip in standard  │
│          Oven           │                              │        latex tank       │
│                         │                              │  Temperature: 18-30°C   │
└─────────────────────────┘                              │ Viscosity : 100 – 400 cps│
            │                                             └─────────────────────────┘
            ▼                                                         ▲
┌─────────────────────────┐                                          │
│  1ˢᵗ dip in synthetic latex │                          ┌─────────────────────────┐
│      blend bench        │                              │       Final Leach       │
│ Temperature: 18-30°C    │                              │ Temperature: 25-50°C    │
│ Viscosity: 1000-4000 cps│                              └─────────────────────────┘
└─────────────────────────┘                                          ▲
            │                                                         │
            ▼                                             ┌─────────────────────────┐
┌─────────────────────────┐                              │          Oven           │
│          Oven           │                              │                         │
│                         │                              └─────────────────────────┘
└─────────────────────────┘                                          ▲
            │                                                         │
            ▼                                             ┌─────────────────────────┐
┌─────────────────────────┐                              │   2ⁿᵈ dip in standard latex │
│      Middle Leach       │                              │          tank           │
│ Temperature: 25-50°C    │                              │ Temperature: 18-30°C    │
└─────────────────────────┘                              │ Viscosity : 100 – 400 cps│
            │                                             └─────────────────────────┘
            ▼                                                         ▲
┌─────────────────────────┐                                          │
│          Oven           │                              ┌─────────────────────────┐
│                         │                              │          Oven           │
└─────────────────────────┘                              │                         │
            │                                             └─────────────────────────┘
            ▼                                                         ▲
┌─────────────────────────┐                                          │
│     Coagulant tank      │──────────────────────────────────────────┘
│  SG : 1.15-1.20 Kg/m³   │
│ Temperature: 70-85°C    │
└─────────────────────────┘
```

Figure 2

Figure 3

**European Patent Office**

**EUROPEAN SEARCH REPORT**

Application Number

EP 07 29 0975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/58656 A (ANSELL HEALTHCARE PRODUCTS INC [MY]; WOODFORD JAMES MICHAEL DANIEL [MY] 16 August 2001 (2001-08-16) * abstract; claims; table 1 * * page 2, line 1 - line 6 * | 1-22 | INV. C08K5/42 C08K3/32 C08L7/02 C08L21/02 C08J3/03 C08J5/02 |
| X | US 6 187 829 B1 (SELLERS ALAN P [US]) 13 February 2001 (2001-02-13) * column 2, line 58 - column 3, line 5 * * example 1; table 1 * | 1-11 | |
| X | EP 1 616 904 A (VANDERBILT CO R T [US]) 18 January 2006 (2006-01-18) * paragraphs [0016] - [0018], [0030]; examples; tables 3,5 * | 1,2,4,5, 8,9,11 | |
| X | DATABASE WPI Week 200542 Derwent Publications Ltd., London, GB; AN 2005-410251 XP002462266 & JP 2005 139281 A (INOAC CORP KK) 2 June 2005 (2005-06-02) * abstract * | 1-4,6-9, 11 | |
| X | US 6 031 042 A (LIPINSKI TIMOTHY M [US]) 29 February 2000 (2000-02-29) * abstract; claims * * examples 1,2; table 1 * | 1,2,4,8, 9,11-22 | |

**TECHNICAL FIELDS SEARCHED (IPC)**

C08L
C08K
C08J

The present search report has been drawn up for all claims

| Place of search | Date of completion of the search | Examiner |
|---|---|---|
| The Hague | 13 December 2007 | Mettler, Rolf-Martin |

EPO FORM 1503 03.82 (P04C01)

**ANNEX TO THE EUROPEAN SEARCH REPORT
ON EUROPEAN PATENT APPLICATION NO.**

EP 07 29 0975

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2007

| Patent document cited in search report | | Publication date | Patent family member(s) | | Publication date |
|---|---|---|---|---|---|
| WO 0158656 | A | 16-08-2001 | AU | 782156 B2 | 07-07-2005 |
| | | | AU | 3143001 A | 20-08-2001 |
| | | | EP | 1254002 A1 | 06-11-2002 |
| | | | JP | 2003530236 T | 14-10-2003 |
| | | | US | 2006179541 A1 | 17-08-2006 |
| US 6187829 | B1 | 13-02-2001 | CA | 2289832 A1 | 09-01-2001 |
| EP 1616904 | A | 18-01-2006 | MX | PA05007582 A | 17-03-2006 |
| JP 2005139281 | A | 02-06-2005 | NONE | | |
| US 6031042 | A | 29-02-2000 | AU | 727151 B2 | 07-12-2000 |
| | | | AU | 3572097 A | 07-01-1998 |
| | | | BR | 9709881 A | 11-01-2000 |
| | | | CA | 2258814 A1 | 24-12-1997 |
| | | | DE | 69732778 D1 | 21-04-2005 |
| | | | EP | 0925329 A1 | 30-06-1999 |
| | | | JP | 3517246 B2 | 12-04-2004 |
| | | | JP | 2000512684 T | 26-09-2000 |
| | | | WO | 9748765 A1 | 24-12-1997 |

EPO FORM P0459

For more details about this annex : see Official Journal of the European Patent Office, No. 12/82